# EUROPÄISCHE PATENTSCHRIFT

(11) **EP 0 434 952 B1**
(45) Veröffentlichungstag und Bekanntmachung des Hinweises auf die Patenterteilung: **08.09.1993**
(21) Anmeldenummer: 90121694.5
(22) Anmeldetag: 13.11.1990
(51) Int. Cl.: H01M 4/04, H01M 4/26, H01M 4/88

(54) **Verfahren zum automatischen Füllen von Elektrodengerüsten in einem Pastenbad**
Method of automatic filling of electrode supports in a pasting bath
Méthode de remplissage automatique de supports d'électrodes dans un bain d'empâtage

(30) Priorität: 23.12.1989 DE 3942763
(43) Veröffentlichungstag der Anmeldung: 03.07.1991
(73) Patentinhaber: DEUTSCHE AUTOMOBILGESELLSCHAFT MBH, 73733 Esslingen (DE)
(72) Erfinder: Von Benda, Klaus, Dr., W-7440 Nürtingen (DE)

(56) Entgegenhaltungen:
- EP-A- 0 341 492

## Beschreibung

Die Erfindung betrifft ein Verfahren zum automatischen Füllen, insbesondere Vibrationsfüllen, oder Beschichten von Elektrodengerüsten in einem Pastenbad, wie es in der DE-PS 38 16 232 angegeben wird.

Beim Füllen, insbesondere Vibrationsfüllen, oder Beschichten von Elektrodengerüsten in einem Pastenbad ist eine horizontale Positionierung der Elektrodenfläche gegenüber der Pastenoberfläche vorteilhafter als eine vertikale Positionierung. Dies ist insbesondere dann der Fall, wenn es sich um Rundelektroden mit einer Mittenkontaktierung durch eine angeschweißte Fahne handelt. Beim Füllen des Elektrodengerüstes soll nämlich die Fahne möglichst wenig mit der Paste beschmutzt werden, damit anschließend kein allzugroßer Reinigungsaufwand notwendig ist. Die an dem Elektrodengerüst angebrachte Fahne soll dabei nur soweit in das Pastenbad eintauchen, wie dies zum Füllen des Elektrodengerüstes mit der Paste notwendig ist. Daher ist die Fahne in der Einbaulage senkrecht zur Gerüstebene der Elektrode gehaltert.

Bei einer automatischen Einführung eines Elektrodengerätes in ein Pastenbad muß eine reproduzierbare Eintauchtiefe des Gerüstes in das Pastenbad sichergestellt sein. Eine solche Konstanthaltung des Eintauchniveaus kann z.B. durch den Einsatz einer Pumpe mit Überlaufgefäß erreicht werden (Jap. Offenlegungsschrift 79 160 582; Chemical Abstracts 93:28 302u). Eine derartige Vorrichtung hat sich bei geringviskosen Fluiden bewährt. Für Pasten ist jedoch eine solche Apparatur zu funktionsträge und zu aufwendig; vor allem deswegen, weil bei einer Höhe des Elektrodengerüstes von 1 bis 3 mm das Niveau der Eintauchtiefe in das Pastenbad auf 0,5 mm genau gehalten werden muß und die Größe des Behälters für das Pastenbad klein gehalten werden soll, um Verdampfungsverluste bei einer zu großen Oberfläche bei dem Pastenbad zu vermeiden.

Ein Verfahren zum Vibrationsfüllen von Schaum- oder Faserstrukturelektrodengerüsten für galvanische Zellen ist der DE-PS 38 16 232 zu entnehmen. Diese Schrift enthält jedoch keine Hinweise bezüglich der Annäherungsgeschwindigkeit der Elektrodengerüste an das Pastenbad und mit der dort angegebenen Verfahrensweise ist auch eine sehr gut reproduzierbare Eintauchtiefe des Elektrodengerüstes in dem Pastenbad nicht sicher gestellt.

Der Erfindung liegt daher die Aufgabe zugrunde, ein Verfahren zum automatischen Füllen von Elektrodengerüsten zu schaffen, wobei vor allem eine gut reproduzierbare Eintauchtiefe des Elektrodengerüstes in dem Pastenbad erzielt werden soll.

Die Aufgabe wird erfindungsgemäß durch das in dem Patentanspruch 1 angegebene Verfahren gelöst.

Um eine Beschädigung des dünnen Elektrodengerüstes bei einem zu schnellen Eintauchen in das Pastenbad zu vermeiden, wird der Einspannkopf mit der Elektrode zuerst schnell bis zu einem definierten Abstand von der Pastenoberfläche zu dieser abgesenkt. Kurz vor oder nach dem Berühren der Pastenoberfläche wird von einem Sensor ein Umschaltsignal abgegeben und die schnelle Absenkbewegung wechselt in eine langamere Eintauchbewegung. Letztere wird nach Erreichen einer vorgegebenen Endposition gestoppt.

Für die Lösung der Aufgabe lassen sich einmal berührungsfrei arbeitende Sensoren verwenden, wie Ultraschallsender-/Empfängeranlagen, kapazitive, induktive und optische Meßwertgeber, mit denen eine laufende oder eine einmalige Distanzmessung zur Ermittlung der Lage der Pastenoberfläche durchgeführt werden kann. Einer für jede Elektrode einmaligen Messung ist dabei der Vorzug zu geben, da die ermittelte Distanz rechnergesteuert in die entsprechende Schrittzahl eines Schrittmotors in einfacher Weise umzuwandeln ist, der danach entsprechend die Elektrode in die Paste einfährt.

Wegen der billigen und robusten Bauweise ist der Einsatz von die Position der Pastenoberfläche berührend erfassenden Sensoren zu bevorzugen. Aufgrund ihres hohen Feststoffgehaltes und der elektrischen Leitfähigkeit einzelner Komponenten bzw. auch der Fluide sind viele Pasten hinreichend leitfähig, eine besonders einfache Bestimmung der Pastenoberfläche durch den Schluß eines Stromkreises über einen als Sensor dienenden Metallteil zu erlauben. Die sich dabei ergebende Widerstandsänderung löst in einer mit dem Stromkreis verbundenen Steuerung einen Umschaltvorgang aus und die Absenkgeschwindigkeit wird geändert, d. h. verlangsamt.

Auch bei dieser Verfahrensweise ist eine Steuerung über Schrittmotoren besonders geeignet, da diese eine genaue Bemessung der Eintauchtiefe über die Zahl der vorgegebenen Schritte erlauben.

In einer einfachen Bauform ist der am Haltewerkzeug für die Elektrode angeordnete, die Pastenoberfläche berührende Sensor in Form eines Kontaktstiftes, z.B. als Draht, vorhanden. Die Spitze des Kontaktstiftes ist dabei in einem vorgegebenen, festen Abstand unterhalb des Elektrodengerüstes angeordnet, so daß bei der Absenkung des Haltewerkzeuges der Kontaktstift die Pastenoberfläche früher berührt als das Elektrodengerüst.

Wegen der sehr genauen Durchführbarkeit des erfindungsgemäßen Verfahrens ist auch eine einseitige Katalysatorbeschichtung von Elektroden für z.B. Nickel/Wasserstoffzellen reproduzierbar möglich. Bei einer derartigen einseitigen Beschichtung taucht das Elektrodengerüst nur mit der der Pastenoberfläche zugewandten Fläche in die Katalysatorpaste ein, die während des Füllvorganges nicht bewegt wird.

Anhand von Beispielen soll die Durchführung des erfindungsgemäßen Verfahrens noch näher erläutert werden.

### Beispiel 1:

Als Apparatur zum Beschichten von Katalysatorelektroden wird ein dreiachsiger Linearroboter mit drei Schrittmotoren und einer Rechensteuerung eingesetzt, der außerdem ein Haltewerkzeug besitzt. An diesem Haltewerkzeug ist ein rundes Elektrodengerüst mit einem Mittelloch, an dessen Rand eine Stromableiterfahne angeschweißt ist, befestigt. Die horizontale x-Achse der Apparatur führt das Haltewerkzeug mit dem daran horizontal befestigten Elektrodengerüst über den Behälter, der Raneynickel als Katalysatorpaste enthält, mit der das Elektrodengerüst beschichtet werden soll. Die vertikale y-Achse der Apparatur bewegt das Haltewerkzeug mit dem Elektrodengerüst in Richtung der Katalysatorpaste in der Behälter und aus der Paste zurück. Mittels einer vertikalen rotierenden z-Achse wird nach der erfolgten Beschichtung des Elektrodengerüstes der Pastenüberschuß abgeschleudert. An dem Haltewerkzeug, das die Elektrode an ihrem Mittelloch festhält, ist an seinem unteren Ende ein Wolfram-Draht vorhanden, der durch das Mittelloch der Elektrode 20 mm unter dem Elektrodengerüst hervorragt. Dieser Draht ist mit einem Eingang der Rechensteuerung verbunden. In der elektrisch leitenden Katalysatorpaste ist ein als Rührflügel dienender Blechstreifen vorhanden, von dem ebenfalls eine Leitung zur Rechensteuerung führt. Zwischen dem Wolframdraht und dem Rührflügel ist eine Spannung von 5 Volt angelegt. Sobald der als Berührungssensor dienende Draht in die Paste eintaucht, wird der Stromkreis geschlossen und die vorher angelegte Spannung bricht zusammen. Dadurch wird die Steuerung der y-Achse, d. h. der Vertikalbewegung, von der ersten, schnelleren Zufahrgeschwindigkeit des Haltewerkzeuges mit der Elektrode auf eine zweite, langsamere Zufahrgeschwindigkeit umgeschaltet. Mit dieser zweiten Geschwindigkeit taucht die Elektrode in die Paste ein. Die Eintauchtiefe ist der Steuereinheit als Schrittzahl des Schrittmotors für die zweite, langsamere Bewegung vorgegeben. Bei Erreichung des entsprechenden Wertes wird der Eintauchvorgang abgebrochen. Um eine optimale Kontaktierung des Rührflügels mit der Katalysatorpaste zu erreichen, ist dieser in dem Pastenbehälter ortsfest angeordnet. Das Durchrühren der Paste erfolgt durch Drehen des Pastentopfes um den Drehflügel. Um eine Einebnung der gerührten Pastenoberfläche vor dem Eintauchen der Elektrode in die Paste sicherzustellen, wird die Drehbewegung des Pastenbehälters durch einen Überfahrschalter vor dem Eintauchen der Elektrode in die Pastenoberfläche ausgeschaltet und nach dem Herausfahren der Elektrode wieder angestellt. Nach dem Herausfahren des beschichteten Elektrodengerüstes aus der Katalysatorpaste wird der Pastenüberschuß mittels der rotierenden z-Achse abgeschleudert.

### Beispiel 2:

Der unter der Apparatur befindliche Behälter enthält eine Nickelhydroxidpaste. In die Paste taucht ein Nickelblechstreifen als Kontaktgeber ein, der in einem ausreichenden Abstand über den Behälterboden angeordnet ist. Als zweiter Kontaktgeber kann ein Draht am Elektrodenhaltewerkzeug, wie in Beispiel 1 beschrieben, dienen, der über eine Verzögerungsschaltung den Vibrationsbeginn auslöst. Zum Füllen des Elektrodengerüstes mit der Paste wird der Pastenbehälter in Vibration versetzt. Die Vibration wird erst eingeschaltet, wenn das zugeführte Haltewerkzeug mit der Elektrode in der Paste die vorgegebene Eintauchtiefe erreicht hat, um ein Verspritzen von Paste während des Eintauchens des Elektrodengerüstes zu vermeiden. Die Vibrationsdauer ist festgelegt, z. B. 5 bis 15 Sekunden. Bevor die Elektrode aus der Paste wieder herausgefahren wird, wird die Vibration des Pastenbehälters wieder abgestellt.

Die Vorteile des erfindungsgemäßen Verfahren bestehen insbesondere darin, daß beim automatischen Beschichten von Elektrodengerüsten in einer Katalysatorpaste eine sehr gut reproduzierbare Eintauchtiefe des Gerüstes in dem Pastenbad erreicht wird. Dadurch können auch sehr gut Elektrodengerüste mit einer Dicke von 1 bis 3 mm mittels einer automatisch arbeitenden Apparatur mit Katalysatorpaste beschichtet werden, wobei es notwendig ist, das Niveau der Eintauchtiefe in das Pastenbad auf 0,5 mm zu halten.

Für das Füllen von Gerüsten mit Pastenmassen ist vorteilhaft, daß ein Spritzen beim Eintauchen und Ausfahren des Gerüsts unter Vibration vermieden wird. Ein Konstanthalten des Pastenniveaus im Pastenbehälter ist nicht erforderlich. Damit werden eine einfache Steuerung und arbeitshygienisch günstige Bedingungen erzielt.

## Patentansprüche

1. Verfahren zum automatischen Füllen, insbesondere Vibrationsfüllen, oder Beschichten von Elektrodengerüsten in einem Pastenbad, wobei das Elektrodengerüst in horizontaler Lage in das Pastenbad eingetaucht wird.
**dadurch gekennzeichnet**,
daß das Elektrodengerüst mit einer Eilgeschwindigkeit der Pastenoberfläche angenähert und mit einer Kriechgeschwindigkeit in die Paste eingetaucht wird und daß der Wechsel von der Eilgeschwindigkeit zur Kriechgeschwindigkeit in einem definierten Abstand von der Pastenoberfläche erfolgt, wobei das Elektrodengerüst - ausgehend vom Umschaltpunkt - mit Kriechgeschwindigkeit um einen für alle nacheinander eingetauchten Elektrodengerüste gleichbleibenden Weg abgesenkt wird.

2. Verfahren nach Anspruch 1,
**dadurch gekennzeichnet**,
daß die Position der Pastenoberfläche mit einem Sensor erfaßt wird.

3. Verfahren nach Anspruch 1 oder 2,
**dadurch gekennzeichnet**,
daß die Position der Pastenoberfläche in Relation zu dem das Elektrodengerüst haltenden, sich auf die Pastenoberfläche absenkenden Einspannkopf, erfaßt wird.

4. Verfahren nach Anspruch 1,
**dadurch gekennzeichnet**,
daß die Position der Pastenoberfläche berührend erfaßt wird.

5. Verfahren nach Anspruch 1 oder 4,
**dadurch gekennzeichnet**,
daß durch einen die Position der Pastenoberfläche erfassenden, als Kontaktstift ausgebildeten Sensor bei dessen Eintauchen in die elektrisch leitende Paste ein Stromkreis geschlossen und dadurch ein Umschaltsignal abgegeben und die Absenkgeschwindigkeit geändert wird.

## Claims

1. Method for automatically filling, in particular vibration-filling, or coating electrode frameworks in a paste bath, in which the electrode framework is immersed in a horizontal position in the paste bath, characterised in that the electrode framework is brought near the surface of the paste at a rapid-traverse speed and is immersed in the paste at a creep speed, and in that the change from the rapid-traverse speed to the creep speed is carried out at a defined distance from the paste surface of the paste, the electrode framework, starting from the switching point, being lowered at creep speed by a distance which remains the same for all the electrode frameworks immersed consecutively.

2. Method according to Claim 1, characterised in that the position of the surface of the paste is determined with a sensor.

3. Method according to Claim 1 or 2, characterised in that the position of the surface of the paste is determined in relation to the clamping head which holds the electrode framework and descends to the surface of the paste.

4. Method according to Claim 1, characterised in that the position of the surface of the paste is determined by contact.

5. Method according to Claim 1 or 4, characterised in that an electrical circuit is closed and a switching signal is consequently emitted and the lowering speed is altered by a sensor, which determines the position of the surface of the paste and which is constructed as a contact pin, when it is immersed in the electrically conducting paste.

## Revendications

1. Procédé de remplissage automatique, notamment de remplissage par vibration, ou de revêtement de supports d'électrodes dans un bain de pâte, le support d'électrodes étant plongé dans le bain de pâte dans une position horizontale, caractérisé en ce que le support d'électrodes est rapproché à une vitesse rapide de la surface de pâte et est plongé à une vitesse de fluage dans la pâte et en ce que le passage de la vitesse rapide à la vitesse de fluage est effectué à un espacement défini de la surface de pâte, le support d'électrodes étant descendu - à partir du point de commutation - à une vitesse de fluage sur une distance constante pour tous les supports d'électrodes plongés l'un après l'autre.

2. Procédé selon la revendicatio 1, caractérisé en ce que la position de la surface de pâte est détectée à l'aide d'un capteur.

3. Précédé selon la revendication 1 ou 2, caractérisé en ce que la position de la surface de pâte est captée par rapport à la tête de serrage maintenant le support d'électrodes et descendant vers la surface de pâte.

4. Procédé selon la revendication 1, caractérisé en ce que la position de la surface de pâte est détectée par contact.

5. Procédé selon la revendication 1 ou 4, caractérisé en ce que, lorsqu'un capteur agencé comme une broche de contact et destiné à détecter la position de la surface de pâte pénètre dans la pâte électriquement conductrice, un circuit électrique est fermé et en conséquence un signal de commutation est produit et la vitesse de descente est modifiée.
